## Europäisches Patentamt

## European Patent Office

## Office européen des brevets

(11) Veröffentlichungsnummer: **0 071 101**
**B1**

(12) **EUROPÄISCHE PATENTSCHRIFT**

(45) Veröffentlichungstag der Patentschrift:
24.09.86

(21) Anmeldenummer: **82106353.4**

(22) Anmeldetag: **15.07.82**

(51) Int. Cl.⁴: **C 05 G 1/00, C 05 B 5/00**

(54) **Verfahren zur Herstellung staubfreier, kalk- und phosphathaltiger Düngemittel.**

(30) Priorität: **24.07.81 DE 3129188**

(43) Veröffentlichungstag der Anmeldung:
**09.02.83 Patentblatt 83/6**

(45) Bekanntmachung des Hinweises auf die Patenterteilung:
**24.09.86 Patentblatt 86/39**

(84) Benannte Vertragsstaaten:
**AT BE CH DE FR GB IT LI LU NL SE**

(56) Entgegenhaltungen:
**DE-C-130 074**
**GB-A-1 380 865**
**GB-A-1 505 565**

**CHEMICAL ABSTRACTS, Band 61, Nr. 5, Spalte 5226h, Columbus, Ohio, USA; W. WOLFROM: "Utilization of the natural thixotropy of superphosphate for granulation with special reference to the capacity of disk granulators"**

(73) Patentinhaber: **THOMASDÜNGER GMBH, Postfach 92 20, D-4000 Düsseldorf 1 (DE)**

(72) Erfinder: **Geiseler, J., Dr.- Ing., Seidenstrasse 23, D-4154 Tönisvorst (DE)**
Erfinder: **Maas, H., Ing.grad., Buengerlerstrasse 67, D-4220 Dinslaken (DE)**
Erfinder: **Munk, H., Dr.- Ing., Veilchenweg 8, D-5628 Heiligenhaus (DE)**

(74) Vertreter: **Patentanwaltsbüro Cohausz & Florack, Postfach 14 01 47, D-4000 Düsseldorf 1 (DE)**

## Description

Die Erfindung betrifft ein Verfahren zur Herstellung staubfreier kalk- und phosphathaltiger Düngemittel.

Der Bedarf an Kalkdüngemittel ist sehr groß. So besteht auf den Böden der Bundesrepublik Deutschland beispielsweise ein Kalkdefizit von jährlich etwa 4 Mio. t CaO. Kalkdüngemittel werden seit vielen Jahren durch Feinmahlung kalkhaltiger Stoffe, wie Eisenhüttenschlacken (Hochofenschlacken, Stahlwerksschlacken), kohlensaurem Kalk, Branntkalk, Löschkalk und andere gewonnen. Zur Erhöhung der Pflanzenwirksamkeit wird je nach verwendetem Ausgangsmaterial eine weitgehende Aufmahlung vorgenommen.

Die Erfahrung hat gezeigt, daß es der Landwirt bevorzugt, wenn er mehrere düngewirksame Komponenten gleichzeitig ausbringen kann. Ein typisches Beispiel hierfür ist das Thomasphosphat, das etwa 45 Gew.-% basisch wirksames CaO und 15 Gew.-% zitronensäurelösliches $P_2O_5$ in chemisch gebundener Form enthält. Mit diesem feingemahlenen Thomasphosphat wurde jahrelang ein hoher Prozentsatz das Phosphat- und Kalkbedarfs gedeckt. Aber auch die Kalkdüngemittel selbst werden vom Landwirt dann besonders geschätzt, wenn sie neben dem CaO-Anteil noch Phosphat als weitere düngewirksame Komponente enthalten, Ein Beispiel hierfür ist der phosphathaltige Konverterkalk. Diese Düngemittel sind jeweils feinpulvrig. Wenn auch feinpulvrige Düngemittel einerseits eine hohe und schnelle Pflanzenwirksamkeit aufweisen, so ist andererseits beim Umschlagen und Ausbringen eine starke Staubbelästigung der damit befaßten Personen nicht auszuschließen. Wünschenswert ist also ein Düngemittel, das beim Umschlagen und Ausbringen wenig staubt, gleichzeitig aber eine hohe Düngewirksamkeit behält. Dies ist unter anderem dadurch möglich, daß aus dem feinpulvrigen, mehlförmigen Gut durch Granulation gröbere, in sich feste Kornaggregate geschaffen werden, die erst im Boden wieder in die mehlfeinen Einzelkörner zerfallen. Zur Herstellung der gröberen Kornaggregate waren bisher stets Stoffe notwendig, die die Aufgabe hatten, die kleinen Einzelkörner zu gröberen Kornaggregaten zu verkitten. Als Bindemittel wurden z.B. vorgeschlagen Kalziumnitrat (DE-A-21 49 263, DE-B-15 92 608), Kaliumchlorid (DE-B- 20 60 927, DE-C- 973 396), Kieserit (DE-B- 12 58 878), Magnesiumsulfat (DE C- 22 03 684), Melasse (DE-B- 12 92 675), Gips (DE-B- 12 37 146), Sulfitablauge (DE-C- 707 211). Die DE-B-12 62 524 enthält den Vorschlag das Stauben durch Ölen des Düngemittels zu vermeiden.

Alle diese Stoffe wirkten stets nur als Bindemittel, tragen selbst aber nicht oder nur in untergeordnetem Maß zur Düngewirkung bei. Außer den Kosten für den eigentlichen Pflanzennährstoffanteil entstehen dabei stets erhebliche zusätzliche Kosten für das Bindemittel, mit dem die mehlfeinen Einzelkörner zur Kornaggregaten verkittet werden.

In der Vergangenheit wurde versucht, phosphathaltige Kalkdüngemittel zu körnen. Wenn man das mehlförmige phosphathaltige Kalkdüngemittel in einem Zwangsmischer unter Zusatz von Wasser granuliert, so kleben die mehlfeinen Partikel des phosphathaltigen Kalkdüngemittels zwar zunächst zu krümeligen Aggregaten zusammen, zerfallen jedoch bei anschließender vollständiger oder teilweiser Trocknung wieder.

Aufgabe der Erfindung ist die Schaffung eines Verfahrens, das bei Einsatz preiswert erhältlicher, einfach zu verarbeitender Stoffe zu einem beim Ausbringen nicht staubenden Düngemittel führt. Dabei soll das Düngemittel in bezug auf die Einsatzstoffe optimale Düngewirkung haben.

Zur Lösung dieser Aufgabe wird erfindungsgemäß vorgeschlagen, daß das feingemahlene kalkhaltige Düngemittel mit 4 bis 20 Gew.-% Wasser und 1 bis 20 Gew.-% $P_2O_5$, das in Form eines oder mehrerer chemisch aufgeschlossener trockener Phosphate vorliegt, unter Bildung von Körnern gemischt und getrocknet werden, Bevorzugt kann der zugesetzte Wasseranteil 8 bis 15 Gew.-% sein.

Es war überraschend, daß Kalkdüngemittel, die mit trockenen chemisch aufgeschlossenen Phosphaten innig vermengt wurden, im Gegensatz zu den Kalkdüngemitteln, die wie Thomasmehl von Hause aus Phosphat enthalten völlig ohne Bindemittel nur mit Wasser zu festen Körnern verarbeitet werden können, die beim Ausbringen nicht stauben.

Ferner hat sich überraschenderweise herausgestellt, daß die Trocknung nicht nur durch warme Luft erzielt wird, sondern daß das körnige, entstaubte Produkt bereits durch kalte Luft getrocknet werden kann. Dadurch läßt sich eine beträchtliche Energieeinsparung erreichen.

Als kalkhaltige Einsatzstoffe kommen insbesondere Eisenhüttenschlacken, wie Hochofen- und Stahlwerksschlacken ferner kohlensaurer Kalk, Branntkalk, Löschkalk, kalkhaltige Entfallstoffe, z.B. Scheidekalk aus der Zuckergewinnung, jeweils in feingemahlener Form einzeln oder zu mehreren, in Betracht. Dem mehlfeinen kalkhaltigen Düngemittel werden dann als trockene chemisch aufgeschlossene Phosphate Alkali-, Erdalkali-, Ammoniumphosphat, z.B. Monokalziumphosphat, Dikalziumphosphat, Diammoniumphosphat, Monoammoniumphosphat, einzeln oder zu mehreren zugemischt. Es zeigt sich, daß Entfallstoffe, die diese Phosphate enthalten, ebenfalls geeignet sind.

Auch die gemeinsame (trockene) Vermahlung der Einsatzstoffe ist möglich. Dem mehlfeinen Gemenge wird Wasser zugesetzt, wodurch während des Mischens chemisch gebundene nicht staubende Körner entstehen.

Durch Behandlung des Guts in einem Mischgerät in Gegenwart von wenigstens 4 Gew.-% Wasser werden aus den mehlfeinen Einzelkörnern kornartige Aggregate unter 5 mm Größe gebildet, deren Größe durch die Verweilzeit im Zwangsmischer und durch die Stärke des Mischvorgangs selbst beeinflußt werdan kann. Bevorzugt wird ein Korngemisch von im Mittel 0,1 bis 2 mm Korngröße. Der Anteil unter 0,1 mm soll geringer als 10 Gew.-% sein.

Während einer sich an die Körnung und Teiltrocknung anschließenden Lagerzeit reifen und trocknen die Körner, wobei Korn- und Abriebfestigkeit steigen. Dieser Prozeß der Festigkeitssteigerung kann durch Luftzuführung beschleunigt werden. Es ist vorteilhaft, die Granulatkörner unmittelbar nach der Entnahme aus

2

Klumpen bilden. Das Material enthält etwa 3 Gew.-% zitronensäurelösliches $P_2O_5$. Es hat ausreichende Festigkeit und unterliegt geringem Abrieb. Beim Ausstreuen ist es staubfrei.

**Beispiel 5**

1 t Kalksteinmehl wird mit 0,10 t Monoammoniumphosphat, das 55 Gew.-% zitronensäurelösliches $P_2O_5$ enthält, und 0,11 t Wasser in einem Pflugscharmischer gekörnt. Das gekörnte Material wird anschließend in einem Wirbelbetttrockner im 180° C warmen Luftstrom auf eine Restfeuchte unter 1 % getrocknet. Man erhält ein Material mit 5 Gew.-% zitronensäurelöslichem $P_2O_5$, das ausreichende Festigkeit aufweist. Beim Ausstreuen ist es staubfrei.

**Patentansprüche**

1. Verfahren zur Herstellung staubfreier, kalk- und phosphathaltiger Düngemittel, dadurch gekennzeichnet, daß das feingemahlene kalkhaltige Düngemittel mit 4 bis 20 Gew.-% Wasser und 1 bis 20 Gew.-% $P_2O_5$, das in Form eines oder mehrerer chemisch aufgeschlossener trockener Phosphate vorliegt, unter Bildung von Körnern gemischt und getrocknet wird.

2. Verfahren nach Anspruch 1, dadurch gekennzeichnet, daß 8 bis 15 Gew.-% Wasser zugesetzt wird.

3. Verfahren nach Anspruch 1 oder 2, dadurch gekennzeichnet, daß im kalten oder warmen Luftstrom vollständig oder teilweise getrocknet wird.

4. Verfahren nach einem der Ansprüche 1 bis 3, dadurch gekennzeichnet, daß als kalkhaltige Düngemittel Eisenhüttenschlacken, kohlensaurer Kalk, Branntkalk, Löschkalk, kalkhaltige Entfallstoffe, jeweils in feingemahlener Form einzeln oder zu mehreren, eingesetzt werden.

5. Verfahren nach einem der Ansprüche 1 bis 4, dadurch gekennzeichnet, daß als chemisch aufgeschlossene Phosphate Alkali-, Erdalkali-, Ammoniumphosphate, einzeln oder zu mehreren eingesetzt werden.

6. Verfahren nach einem der Ansprüche 1 bis 5, dadurch gekennzeichnet, daß die Einsatzstoffe gemeinsam vermahlen und anschließend unter Zusatz von Wasser gekörnt werden.

7. Verfahren nach einem der Ansprüche 1 bis 6, dadurch gekennzeichnet, daß das erzeugte Düngemittel eine Korngröße von im Mittel 0,1 bis 2 mm mit einem Anteil unter 0,1 mm von höchstens 10 Gew.-% und einem Größtkorn von 5 mm aufweist.

8. Verfahren nach einem der Ansprüche 1 bis 7, dadurch gekennzeichnet, daß das anfallende teilgetrocknete Gut einer Reifung bis zu 5 Tagen unterworfen wird.

9. Verfahren nach einem der Ansprüche 1 bis 8, dadurch gekennzeichnet, daß der Mischung weitere düngewirksame Verbindungen von Stickstoff, Kalium, Phosphor, Magnesium, einzeln oder zu mehreren zugesetzt werden.

**Claims**

1. A method for producing dust-free fertilizer containing lime and phosphate, characterised in that the finely ground limy fertilizer is mixed with 4 to 20% by weight of water and 1 to 20% by weight of $P_2O_5$, which is in the form of one or more dry phosphates which is/are chemically broken down so as to form granules and then dried.

2. A method as claimed in claim 1, characterised in that 8 to 15% by weight of water is added.

3. A method as claimed in claim 1 or 2, characterised in that complete or partial drying is carried out in a cold or warm air stream.

4. A method as claimed in one of claims 1 to 3, characterised in that slag from ironworks, calcium carbonate, burnt lime, slaked lime, limy waste are used individually or in combination as the limy fertilizer, always in a finely ground form.

5. A method as claimed in one of claims 1 to 4, characterised in that alkaline phosphates, alkaline earth phosphates, ammonium phosphates are used individually or in combination as chemically broken down phosphates.

6. A method as claimed in one of claims 1 to 5, characterised in that the raw materials are ground together and subsequently granulated with the addition of water.

7. A method as claimed in one of claims 1 to 6, characterised in that the fertilizer produced has an average grain size of 0.1 to 2 mm, the fraction under 0.1 mm being at most 10% by weight and the maximum grain size being 5 mm.

8. A method as claimed in one of claims 1 to 7, characterised in that the resultant partially dried product is left to mature for up to 5 days.

9. A method as claimed in one of claims 1 to 8, characterised in that further compounds of nitrogen,

der Mischeinrichtung oberflächlich leicht anzutrocknen. Durch diese Trocknung wird die Festigkeit so weit gesteigert, daß die Körner beim anschließenden Transport in das Reifelager nicht mehr zerstört werden können. Die Dauer der Reifung kann im allgemeinen auf 5 Tage begrenzt werden. Nach dieser Zeit laufen zwar die Reaktionen noch weiter ab, wobei die Festigkeit der Körner weiter steigt, für einen problemlosen Transport ist dies jedoch nicht unbedingt erforderlich. Das Lagerverhalten der Produkte nach dieser Erfindung ist ausgezeichnet. Auch nach über einjähriger Lagerung unter erschwerten Lagerbedingungen blieb das Material streufähig und zerfiel auch im Boden wieder in die mehlfeinen Einzelkörner. Zur Erhöhung der Düngewirkung können nach einer vorteilhaften Ausgestaltung des erfindungsgemäßen Verfahrens weitere düngewirksame Verbindungen von Stickstoff, Kalium, Phosphor, Magnesium, einzeln oder zu mehreren zugesetzt werden.

Die Vorteile die sich aus der Anwendung des erfindungsgemäßen Verfahren und der Verwendung des danach hergestellten Düngemittels ergeben, lassen sich wie folgt zusammenfassen:

- Einsatz preiswerter Stoffe, wie Hüttenschlacken als kalkhaltiges Material und Entfallstoffe als Phosphat sowie Wasser
- Verwendung trockener wenig aggresiver beim Einsatz und bei der Verarbeitung leicht zu handhabender Stoffe
- kurze Verarbeitungszeit beim Mischen mit Wasser zwecks Körnens
- Verwendung von Kaltluft zum Trocknen und dadurch hohe Energieeinsparung
- hohe Düngewirkung, weil alle eingesetzten Stoffe zur Düngung beitragen
- Erzeugung eines beim Ausstreuen nicht staubenden Düngemittels. Das erfindungsgemäße Verfahren wird anhand folgender Ausführungsbeispiele näher erläutert.

### Beispiel 1

1 t LD-Schlackenmehl mit rund 1 Gew.-% zitronensäurelöslichem $P_2O_5$ wird mit 0,24 t mehlförmigem Triplesuperphosphat, das 48 Gew.-% zitronensäurelösliches $P_2Oi5$ enthält, und rund 0,16 t Wasser im kontinuierlich arbeitenden Zwangsmischer gekörnt und anschließend in einem Fließbetttrockner im 180° C warmen Luftstrom auf eine Restfeuchte unter 1 % getrocknet. Man erhält ein Material, bei dem die Körner nach dem Trocknen nicht miteinander verbacken und keine Klumpen bilden. Das Material enthält etwa 10 Gew.-% zitronensäurelösliches $P_2O_5$ und hat ausreichende Festigkeit sowie einen geringen Abrieb, so daß es beim Ausstreuen mit dem Kreiselstreuer nicht staubt.

### Beispiel 2

1 t LD-Schlacke mit etwa 1 Gew.-% zitronensäurelöslichem $P_2O_5$ wird gemeinsam mit 0,15 t körnigem Triplesuperphosphat, das 48 Gew.-% zitronensäurelösliches $P_2O_5$ enthält, in einer Schlackenmühle auf eine Feinheit von 80 % unter 0,16 mm Durchmesser vermahlen. Anschließend wird dies Gemisch mit 0,14 t Wasser in einem Schugi-Agglomerator gekörnt. Danach wird es in einem Wirbelbett in einem kalten Luftstrom von etwa 20° C auf eine Restfeuchte von etwa 5 % teilgetrocknet. Man erhält ein Material, dessen Körner nicht miteinander verbacken und keine Klumpen bilden. Das Material enthält etwa 7 Gew.-% zitronensäurelösliches $P_2O_5$. Es hat ausreichende Festigkeit und staubt beim Ausstreuen nicht.

### Beispiel 3

1 t LD-Schlackenmehl mit etwa 1 Gew.-% zitronensäurelöslichem $P_2O_5$ wird mit 0,15 t Triplesuperphosphat, das 48 Gew.-% zitronensäurelösliches $P_2O_5$ enthält, und mit 0,13 t Diammoniumphosphat, das 54 Gew.-% zitronensäurelösliches $P_2O_5$ enthält, und mit 0,14 t Wasser in einem Pflugscharmischer gekörnt. Das Material wird anschließend in einer Trockentrommel nachgerollt und in einem 150° C warmen Luftstrom auf eine Restfeuchte von etwa 4 Gew.-% getrocknet. Man erhält ein Material, dessen Körner nicht miteinander verbacken und keine Klumpen bilden. Das Material enthält etwa 12 Gew.-% zitronensäurelösliches $P_2O_5$. Es hat ausreichende Festigkeit und staubt beim Ausstreuen nicht.

### Beispiel 4

1 t Hochofenschlackenmehl mit unter 0,1 Gew.-% zitronensäurelöslichem $P_2O_5$ wird mit 0,06 t Diammoniumphosphat, das 54 Gew.-% zitronensäurelösliches $P_2O_5$ enthält, und 0,11 t Wasser in einem Schugi-Agglomerator gekörnt und anschließend in einer Trockentrommel in einem 150° C warmen Luftstrom auf 4 % Restfeuchte getrocknet. Man erhält ein Material, dessen Körner nicht miteinander verbacken und keine

potassium, phosphorus, magnesium with a fertilizing effect are added individually or in combination to the mixture.

## Revendications

1.- Procédé pour la fabrication d'engrais sans poussière, contenant de la chaux et des phosphates, procédé caractérisé en ce que l'engrais finement moulu contenant de la chaux est mélangé, pour former des grains, puis séché, avec 4 à 20 % en poids d'eau et 1 à 20 % en poids de $P_2O_5$ présent sous la forme d'un ou plusieurs phosphates séchés et liés chimiquement.

2.- Procédé selon la revendication 1, caractérisé en ce que l'on ajoute 8 à 15 % en poids d'eau.

3.- Procédé selon la revendication 1 ou 2, caractérisé en ce qu'on sèche partiellement ou complètement dans un courant d'air froid ou chaud.

4.- Procédé selon une des revendications 1 à 3, caractérisé en ce que, en tant qu'engrais contenant de la chaux, on met en oeuvre des scories sidérurgiques, du carbonate de chaux, de la chaux vive, de la chaux éteinte, des déchets contenant de la chaux, ces produits étant utilisés individuellement ou non en étant finement moulus.

5.- Procédé selon une des revendications 1 à 4, caractérisé en ce que, en tant que phosphates liés chimiquement, on met en oeuvre des phosphates alcalins, des phosphates alcalino-terreux, des phosphates ammoniacaux, ces phosphates étant utilisés individuellement ou non.

6.- Procédé selon une des revendications 1 à 5, caractérisé en ce que les substances mises en oeuvre sont moulues ensemble et ensuite granulées avec addition d'eau.

7.- Procédé selon une des revendications 1 à 6, caractérisé en ce que l'engrais obtenu a des dimensions de grains de 0,1 à 2 mm en moyenne, avec une fraction au-dessous de 0,1 mm ne dépassant pas 10 % en poids et avec une dimension maximale de grains de 5 mm.

8.- Procédé selon une des revendications 1 à 7, caractérisé en ce que le produit partiellement séché ainsi obtenu est soumis à une maturation pouvant durer 5 jours.

9.- Procédé selon une des revendications 1 à 8, caractérisé en ce que d'autres combinaisons fertilisantes d'azote, de potassium, de phosphore, de magnésium sont ajoutées au mélange individuellement ou non.